# EUROPEAN PATENT SPECIFICATION

(11) **EP 0 666 448 B1**
(45) Date of publication and mention of the grant of the patent: **02.10.2002**
(21) Application number: 94304818.1
(22) Date of filing: 30.06.1994
(51) Int. Cl.: F16L 55/46, F17D 3/08

(54) **Pipeline apparatus**
Rohrleitungsgerät
Appareil de conduite

(30) Priority: 02.02.1994 GB 9402023
(43) Date of publication of application: 09.08.1995
(73) Proprietor: MAINTREND SERVICES LIMITED, Atherstone, Warwickshire CV9 1AF (GB)
(72) Inventor: Suttie, Walter Robert, Worksop, Nottinghamshire S80 4RJ (GB)
(74) Representative: Linn, Samuel Jonathan

(56) References cited:
- EP-A- 0 436 214
- DE-A- 2 755 451
- DE-A- 2 851 672
- DE-A- 3 305 604
- DE-U- 8 136 954
- US-A- 3 384 512

## Description

The invention relates to pipeline apparatus and in particular to an apparatus and method by means of which one or more pigs within a pipeline can be controlled. For example, the pipeline pig may be launched from a trap or caused to take a particular path when travelling along a pipe or pipeline which may be split into two or more separate streams.

Pipeline pigs or other objects are used in a number of industries for cleaning pipelines or for forming a moving barrier between different fluids being pumped through a pipeline. It is therefore a common requirement to be able to hold one or more such pigs in a launching trap to be released as required.

It is a further common requirement to be able to divert a moving pig, or two or more pigs travelling in sequence along a pipeline, so that the or each pig takes a particular path when it reaches a point where the pipeline splits into two or more separate streams.

In both these instances it has in the past been necessary to employ intrusive devices fitted to the pipeline to perform the required function - such devices typically taking the form of movable vanes, fingers or elbows. However, the maintaining of seals forming part of the mechanisms extending through the pipeline walls has been a problem because such pipelines are frequently required to work continuously at high pressure.

In the food and pharmaceutical industries in particular such mechanisms provide further problems due to the difficulty of keeping them clean; any mechanism including sealing elements which rotate or move slidably are a serious hazard for contamination. UK Patent No. 1543797 discloses a fluid flow diverter which has an inlet pipe and at least two outlet pipes. In the area of the junction of the three pipes a ferromagnetic ball is moveable by magnetic means so as to block one or the other of the two outlet pipes. US Patent No. 3384512 discloses a pigging device launching detecting system. Means are provided for launching a pigging device into a carrying line and an electrical sensing means is provided for responding to the passage of a magnet containing pigging device past a predetermined point in the pipeline. Control means operate to regulate the launching means.

According to one aspect of the invention, there is provided a method of controlling within a pipeline a pipeline pig according to claim 6.

Thus the pig may be adequately controlled using equipment external to the pipeline and without requiring any intrusive devices fitted to the pipeline.

According to another aspect of the invention, there is provided apparatus for controlling a pipeline pig within a pipeline according to claim 1.

The apparatus may be used to effect the release of the object, e.g. a pig, from a trap into a pipeline.

Again, by use of this apparatus a suitable pig may be controlled from outside the pipeline. The magnetic means may, for example, include a permanent magnet or an electromagnet. The term "magnetically attractable means" includes material which may be attractable by a magnet. If the pig is made at least partly of magnetically attractable material then the apparatus will include magnetic means, and vice versa.

The magnetic or magnetically attractable means may be adapted for location in association with a region or junction in a pipeline, and the means are then usable to control the pig to urge it into a predetermined branch of the pipeline.

According to a further embodiment, the invention, may include pipeline apparatus including a pipeline and associated magnetic or magnetically attractable means and control means, the control means being for controlling the movement of pig within the pipeline, or to effect the release of a pig from a trap into the pipeline by use of the magnetic or magnetically attractable means to magnetically attract or repel the pig. As above, preferably the magnetic or magnetically attractable means are located in association with a region or junction in the pipeline and are usable to control the pig, to urge it into a predetermined branch of the pipeline.

The pipeline may include first and second regions, the first region being adjacent to and having a larger cross-sectional area than the second region, with the pig being located in the first region. The magnetic or magnetically attractable means may then be usable to urge the pig into the entrance to the second region.

The pipeline may also include a third region, similar to the second region in that it is also adjacent the first region and has a smaller cross-sectional area than the first region. The magnetic or magnetically attractable means may then also be usable to urge the pig into or the entrance to the third region.

The pipeline junction may be a "Y" junction and the magnet or magnetically attractable means may include three magnetic or magnetically attractable elements, one located in association with each branch of the junction. Each of the magnetic or magnetically attractable elements may be usable to urge the pig into the branch of the pipeline with which it is associated.

In one embodiment of the invention, the "Y" junction of the pipeline includes an enlarged region at the junction of the three branches. A pig or other movable object may be located within this enlarged region. The magnet or magnetically attractable means includes a fourth magnetic or magnetically attractable element located, for example, above the centre of the enlarged region so as to be usable to retain the pig in the centre of "Y" junction.

When the pig is retained in the centre of the junction it is not blocking any of the branches of the junction and fluid may flow freely through the various branches. However, when one of the magnetic or magnetically attractable elements associated with one of the branches is activated by the control means (and correspondingly the fourth magnetic or magnetically attractable element is deactivated) then the pig is attracted to the appropriate branch which it may then pass along.

The pipeline apparatus may include a trap for introducing a pig into the pipeline, the magnetic or magnetically attractable means being associated with the trap and being usable to retain a pig in the trap. The magnetic or magnetically attractable means may include two magnetic or magnetically attractable elements, each such element of being usable to retain a separate pig in the trap.

The release of at least one pig from a trap into a pipeline may be assisted by a flow of fluid acting to force the pig into said pipeline.

The present invention uses a pipeline pig made at least partly of magnetically attractable or magnetic material. The pig may have a core made at least partly of magnetically attractable and magnetic material and a sheath covering at least part of the core. Alternatively it may have an elongate core made at least partly of magnetically attractable or magnetic material, and at least one resilient member extending away from the core.

According to a still further embodiment the invention may include, in combination, at least one pipeline pig made at least partly of a magnetically attractive or magnetic material and at least one electromagnet or permanent magnet, or at least one ferrous element in association with a pipeline or trap communicating with a pipeline and capable of being switched into or out of operation to an extent for controlling said at least one such pig within said pipeline or the entry of said at least one such pig into said pipeline.

In the case of a permanent magnet, switching into or out of operation may be by the movement of said magnet or of a connecting element into or out of an operative position and/or by the movement of a shielding device into or out of an inoperative position.

In the case of a ferrous element arranged to release or to capture, or to influence the path of movement, of a magnetic pig, its switching into or out of operation may be by the movement of said ferrous element into or out of an operative position and/or by the movement of a shielding device into or out of an inoperative position.

In the case of an electromagnet, it may be activated or deactivated by electrical control as appropriate.

In order that the invention may be fully understood and readily carried into effect, embodiments of the invention will now be described, by way of example only, with reference to the accompanying drawings, of which:-
Figure 1 is a semi-diagrammatic view of a pipeline where it branches into two separate flow lines,
Figure 2 is a sectional view through a trap device for a plurality of pipeline pigs of spherical shape,
Figure 3 is a view similar to Figure 2 which illustrates a modification of the trap device,
Figure 4 is a sectional view through a different construction of trap device for a pipeline pig of elongate generally cylindrical shape,
Figure 5 is a view in the direction of arrow 5 in Figure 4,
Figure 6 is a cross-sectioned view through a pipeline which may be used with the present invention,
Figures 7a, 7b and 7c are diagrammatic views showing operation of the apparatus illustrated in Figure 6, and
Figure 8 is a sectional view through a pipeline showing apparatus in use as a check valve.

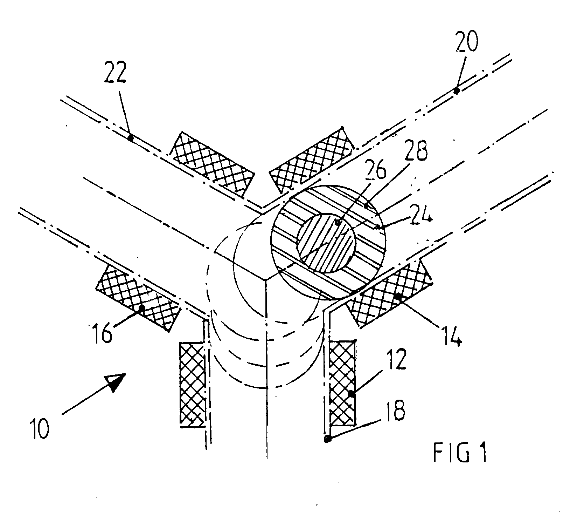

Referring now to Figure 1, the Y-piece there illustrated and generally indicated 10 is part of a pipeline shown in chain-dotted lines. The Y-piece is made of thin walled stainless steel (that is to say in the region of 1.5 mm thick) and has electric coils 12,14,16 around respective branch pipes 18,20,22.

A pipeline pig, generally indicated 24, which is shown passing through the Y-piece 10, has a spherical core 26 of ferrous metal and an outer sheath 28 of polyurethane.

The arrangement is such that as the pipeline pig approaches the Y-piece, the electric coil surrounding the branch pipe which it is desired it should enter will be energised to produce an electromagnetic effect. The switching into operation of that particular electric coil thus influences the path of movement of the pig as it enters the Y-piece.

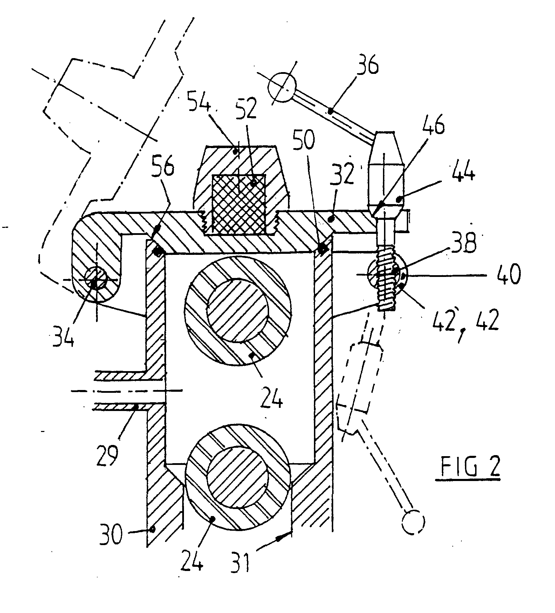

Referring now to Figure 2, this illustrates a trap device for a pair of the pipeline pigs 24 previously referred to. Said trap device, which may be made almost entirely of stainless steel, includes an upstanding barrel 30 which at its lower end communicates with a pipeline (not shown) of e.g. a food processing plant.

The upper end of the barrel 30 is provided with a sealing head 32 which at one side is connected by pivot pin 34 to said barrel. At the other side of said sealing head, a locking lever 36 is provided for turning a clamping screw 38 which engages a nut 40 trunnion mounted between a pair of lugs 42,42. The arrangement is such that, in an operative position of the locking lever 36, a part-spherical portion 44 thereof can be engaged with a slotted seating 46 in said sealing head, as shown in full lines in Figure 2. When the trap device is to be opened, the locking lever can be unscrewed so that it can then be pivoted to the inoperative position in which it is shown in chain-dotted lines; the sealing head 32 is then able to be pivoted to an open position as shown in chain-dotted lines.

The sealing head 32 is provided on its underside with a shallow frusto-conical portion 48 which is able to seal against a PTFE insert 50 at the upper end of the barrel. On its top side said sealing head is provided with an electrical coil 52 located within a protective cover 54, the latter having screwthreaded engagement within a cylindrical depression 56 in the sealing head, the arrangement being such that the electrical coil is spaced from the underside of the sealing head by a relatively thin section of material which when the trap device is closed is located at the vertical axis of the barrel.

Intermediate the upper and lower ends of the barrel, a branch pipe 29 communicates with the interior of the barrel.

In use of the device, the pair of pigs 24 are entered into the trap device so that the lowermost pig is located at the entrance to a reduced diameter lower portion 31 of the barrel and the uppermost pig is located in the uppermost part of the barrel. The sealing head 32 is then clamped in its closed position on the barrel 30 and the electrical coil 52 is energised so that the uppermost pig is held by magnetic attraction against the underside of said sealing head.

A flow of fluid through the branch pipe 29 when the pair of pigs have been arranged as just described, will force the lowermost pig through the reduced diameter portion 31 and into the pipeline where it will be entrained in the fluid passing through said pipeline.

After an appropriate time lapse, the electrical coil 52 will be de-energised so that the remaining pig is allowed to fall into the position previously occupied by the lowermost pig, a further flow of fluid through the branch pipe then causing said pig to be forced through the reduced diameter portion 31 and into the pipeline.

A volume of fluid will thus be trapped between the two pigs in said pipeline. (The fluid concerned may be a valuable substance which needs to be recovered before the pipeline is flushed out in readiness to receive some different fluid).

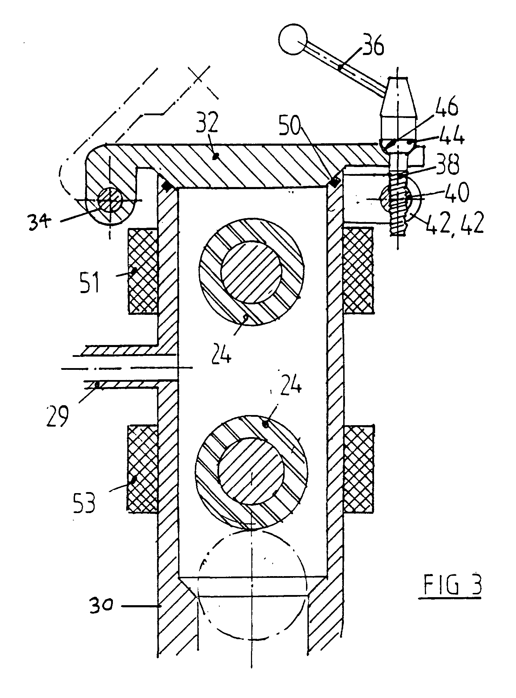

In Figure 3 there is illustrated a modified form of the trap just described, the modification residing in the fact that instead of the electrical coil 52 on the sealing head the trap is provided with a pair of electromagnetic coils 51 and 53 surrounding the barrel.

The arrangement is such that the two pipeline pigs 24 which are shown to have been entered into the trap can be suspended within the respective electromagnetic coils, as shown in full lines in the drawing. They can be released in turn to fall into the position shown in chain-dotted lines, and to be forced by a flow of fluid through the branch pipe 29 along the reduced diameter portion 31 of the barrel and into the pipeline beneath said barrel, at the will of an operator or in response to signals from some remote location operating appropriate control apparatus.

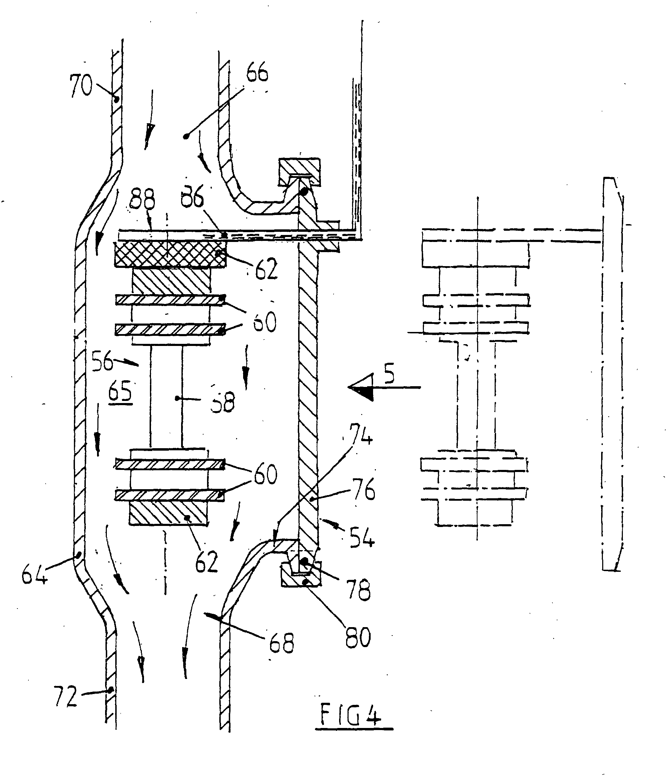

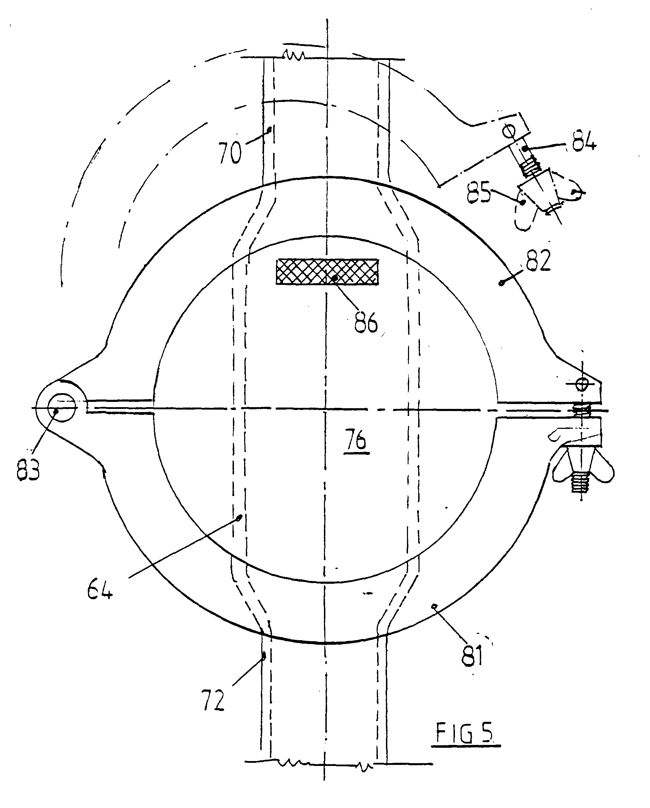

Referring now to Figures 4 and 5, these illustrate a trap device, generally indicated 54, containing a piston type pipeline pig 56, that is to say a pipeline pig of elongate generally cylindrical shape. The pig has an elongate cylindrical core 58 with pairs of resilient discs 60,60 near its opposite ends. At its opposite ends the pig is provided with circular plate elements 62 made of ferrous metal.

The trap device has a trap body 64 with a generally cylindrical chamber 65 of somewhat larger diameter than the resilient discs 60 of the pig. The chamber 65 is also somewhat longer than the pig so that a flow of fluid can take place around said pig from one end 66 to the other end 68 as indicated by arrows. The opposite ends of the device are shown to be welded to respective pipes 70 and 72 having bore diameters in which the resilient discs of the pig are an interference fit.

A circular aperture 74 in a side wall of the trap body 64 is shown to be closed by a removable access cover 76, the latter having a PTFE sealing ring 78 to ensure a fluid tight joint is maintained. Means for securing the access cover against a sealing face of the trap body comprise a locking ring generally indicated 80, of substantially U-shaped cross section which, as shown in Figure 5, is made in two halves 81 and 82 pivotally connected together at 83.

A screwthreaded clamping screw 84 and wing nut 85 are provided for urging the two halves of the locking ring together so that, by virtue of the inclined surfaces within said locking ring and the complementary shape of the surfaces which they engage, the access cover is urged into tight engagement with the clamping face of the trap body.

The access cover 76 carries an inwardly projecting arm 86 which locates an electrical coil 88 at the axis of the trap body. The coil 88 can be energised by an electrical supply externally of the trap. It is the energised coil which holds the pipeline pig 56 in the position in which it is shown in full lines by magnetic attraction.

The arrangement is such that when the pipeline in which the trap is installed has been drained, the access cover can be removed, either to extract the pipeline pig or to position a fresh pig against the projecting arm 86, as shown in chain-dotted lines in Figure 4. A newly installed pig will be held in the position shown in full lines in Figure 4 for as long as the coil is energised. When the coil is de-energised, the pig will be released to travel along the pipe 72.

A pig which has been released to travel along the pipe 72, propelled therealong by a flow of fluid behind it, may subsequently be returned to the trap by a reverse flow of fluid. When it reaches the trap it will of course be brought to a halt by its abutment against the arm 86; the electrical coil 88 will then be energised so that when the pipeline has subsequently been drained, the access cover 76 can be removed to extract the pig from the trap.

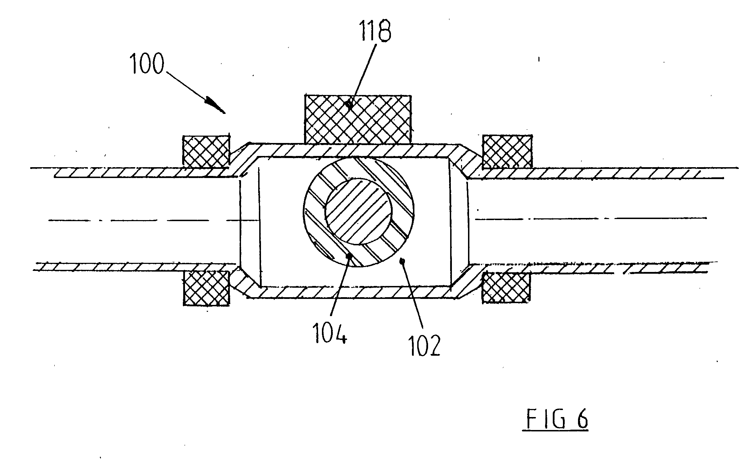

Figure 6 shows a cross-sectional view through a "Y" junction 100 of a pipeline. The "Y" junction includes an enlarged central region 102 within which an object 104 is located. Associated with each of the three branches 106, 108, 110 are magnetic elements 112, 114, 116 respectively.

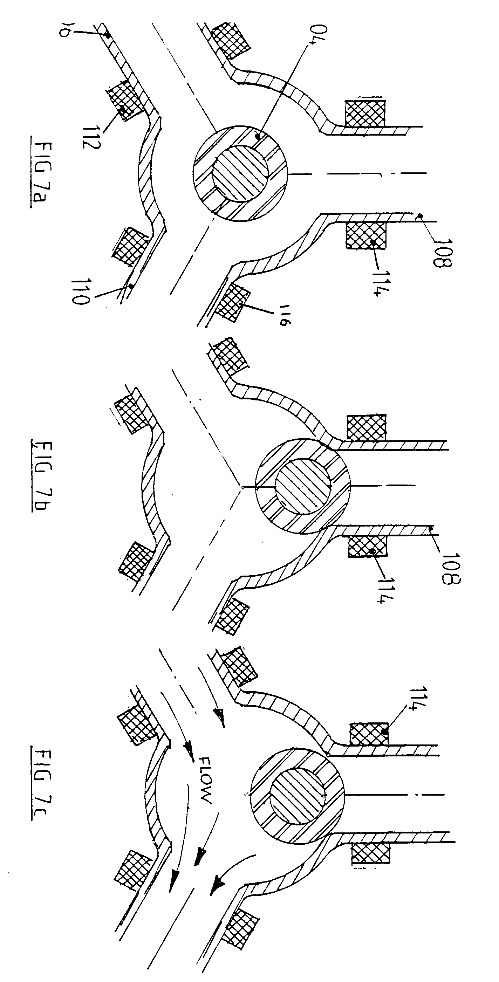

Above the central region 102 is located a further magnetic element 118. In figure 6 the magnetic element (centralising coil) 118 is shown to be activated and the object 104 is held in position by the element 118. This is also the situation shown in Figure 7a. In this position - the neutral position - fluid in the pipe is free to pass from any given branch into either of the others.

However if one of the three branch magnetic elements is activated then the object 104 will be attracted to that branch. In Figure 7b element 114 is activated and the object is attracted to branch 108. At the same time as activation or energising of element 114, the central control coil 118 is de-energised.

Depending upon the relative sizes of the object and branch 108, the object (eg. in this case a pig) may travel down branch 108 (as claimed in the present invention) or branch 108 may be effectively closed by the object and hence flow in the pipe limited to the "unenergised" branches. In Figure 7c this would mean that flow is from branch 106 to branch 110. Thus the apparatus can function as apparatus for directing a pig.

The apparatus shown in figures 6 and 7 may be used in conjunction with a trap if required.

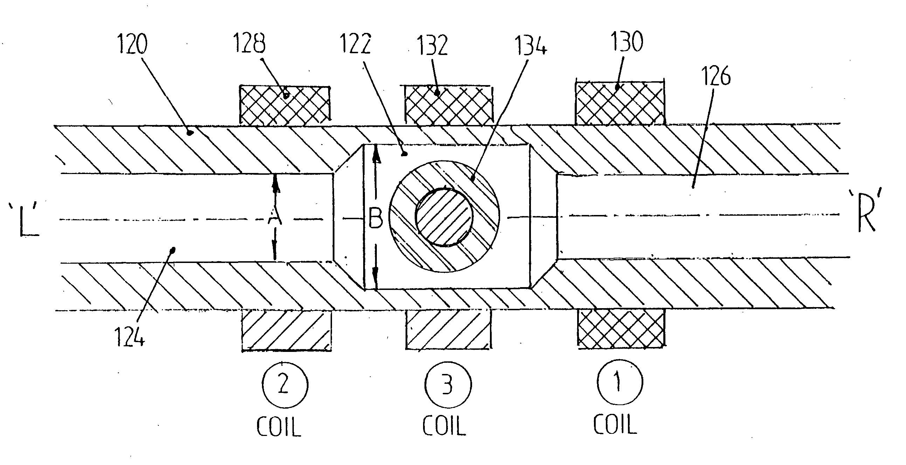

Figure 8 shows a sectional view through a pipeline for use with the present invention. Here the pipeline incorporates a "check valve". The pipeline 120, of nominal diameter A, includes an enlarged region 122 of diameter B. Thus the enlarged region 122 is located between two smaller regions 124 and 126, with the cross-sectional area of region 122 being greater than that of regions 124 and 126.

Located in relation to regions 124 and 126 are coils 128 and 130 respectively. In this embodiment these are electromagnetic coils but of course could equally be permanent magnets or magnetically attractable means as described earlier in the specification. Located in relation to the enlarged region 122 is coil 132.

Located within the enlarged region 122 is an object 134, such as a pipeline pig, made of at least partly of magnetic or magnetically attractable material as required.

In operation the apparatus functions as follows: if none of the coils are energised, fluid may not flow in the pipeline in either direction. If coil 128 is energised flow may take place only from left to right as shown in Figure 8. Conversely if coil 130 is energised flow may take place only from right to left. Finally, with coil 132 energised the object is held centrally and flow may take place through the pipeline in either direction. Thus the apparatus functions as a check valve.

Clearly if only a one way valve were required then one or other of the coils could be omitted appropriately.

Thus there is provided means whereby an object such as a pipeline pig can be either launched from a trap or caused to take a particular path when travelling along a pipeline and coming to a branching of the pipeline, such means being devoid of movable vanes, fingers or elbows.

However, various modifications may be made. For example, with each pipe junction or trap device, instead of at least one electromagnet there could be at least one associated permanent magnet capable of being switched into or out of operation to influence the path of movement of at least one magnetically attractive pig or to release or to capture at least one such pig, as the case may be, the switching into or out of operation being effected by moving said at least one permanent magnet or a connecting element into or out of an operative position and/or by the movement of a shielding device into or out of an inoperative position.

Alternatively, instead of the pipeline pigs being made at least partly of a magnetically attractive material (e.g. having a ferrous core) to be influenced by at least one electromagnet or permanent magnet, they could be themselves magnetic. In this way said pigs could be influenced by at least one ferrous element movable into or out of an operative position.

For example, in the case of a branch pipe such as that illustrated in Figure 1, instead of the electrical coils there could be a ferrous element, or respective ferrous elements, movable into position alongside any particular one of the three branches to influence the path of travel of a magnetic pig therethrough.

In the case of the trap illustrated in Figure 2, instead of the electrical coil 52 there could be a ferrous element movable into and out of a position in which it causes a magnetic pig to remain suspended in position within the barrel 30. In the case of the trap illustrated in Figure 3, instead of the electromagnetic coils 51 and 53 there could be respective ferrous elements movable into and out of positions in which they cause the two pigs to remain suspended in their positions within the barrel.

In the case of the trap illustrated in Figures 4 and 5, instead of the electrical coil 88 there could be a ferrous plate element slidable along a slot extending along the arm 86 and opening externally of the trap. The presence of said plate element within the arm at the axis of the trap would retain a magnetic pig in abutment with the arm; the withdrawal or partial withdrawal of said plate element from within the arm would release the pig.

## Claims

1. An apparatus including:
a pipeline (70) operable to conduct a flowing fluid;
a chamber (65) forming a first region of the pipeline, to which first region a second region and a third region of the pipeline are separately connected;
a magnetically attractable pig (56) being at least partly of magnetic or magnetically attractable material which pig is capable of passing along the third region of the pipeline;
a magnetic or magnetically attractable means (88) for magnetically attracting or repelling the pig, the magnetic or magnetically attractable means (88) being located in association with the chamber (65);
and control means for controlling the attraction or repulsion of the magnetic or magnetically attractable means (88)so as to control the movement of the pig (56) along the pipeline;
**characterized in that**:
the cross-sectional area of the chamber is greater than the cross-sectional area of the second region and the third region of the pipeline,
in use, the second region of the pipeline forming a fluid inlet to the chamber and the third region of the pipeline forming a fluid outlet therefrom,
the magnetic or magnetically attractable means (88) are operable to magnetically retain the pig (56) within the chamber (65) so as to allow fluid to flow past the retained pig and are operable to effect release of the retained pig from the chamber in the direction of the fluid outlet of the chamber.

2. An apparatus according to claim 1 wherein a fourth region of pipeline is connected to the chamber (102) separately from the second and the third regions and the magnetic or magnetically attractable means is operable to urge the pig (104) within the chamber (102) towards a selected one of the third and fourth regions of the pipeline and the pig is capable of passing in use along the fourth region of the pipeline.

3. An apparatus according to claim 2 wherein the magnetic means has elements (112, 114, 116, 118) located in association with each of the said regions of the pipeline extending from the chamber (102).

4. An apparatus according to claim 1 including a trap (64) for introducing the pig (56) into the pipeline, the magnetic or magnetically attractable means (86) being associated with the trap and being used to retain the pig in the trap.

5. An apparatus according to claim 4 wherein the magnetic or magnetically attractable means includes two magnetic or magnetically attractable elements (51, 53), each such element being useable to retain the pig (24) in the trap.

6. A method of controlling a magnetically attractable pipeline pig (56), the method including the steps of:
providing a pipeline (70) operable to conduct a flowing fluid;
providing a chamber (65) forming a first region of the pipeline, to which first region a second region and a third region of the pipeline are separately connected;
providing a magnetically attractable pig (56) being at least partly of magnetic or magnetically attractable material which pig is capable of passing along the third region of the pipeline;
providing a magnetic or magnetically attractable means (88) to magnetically attract or repel the pig, the magnetic or magnetically attractable means (88) being located in association with the chamber (65);
and providing control means for controlling the attraction or repulsion of the magnetic or magnetically attractable means (88) so as to control the movement of the pig (56) along the pipeline;
**characterized in that**:
the cross-sectional area of the chamber so provided is greater than the cross-sectional area of the second region and the third region of the pipeline,
in use the second region of the pipeline is used to provide a fluid inlet to the chamber and the third region of the pipeline is used to provide a fluid outlet therefrom,
the control means is used to control the magnetic or magnetically attractable means (88) to magnetically retain the pig (56) within the chamber (65) so as to allow fluid to flow past the retained pig, and to effect release of the retained pig from the chamber in the direction of the fluid outlet of the chamber.

7. A method according to claim 6 wherein the pig is magnetically retained or released from the chamber (102) which includes a fourth region of pipeline connected to the chamber separately from the second and the third regions, and the magnetic or magnetically attractable means is used to urge the pig (104) within the chamber (102) towards a selected one of the third and fourth regions of the pipeline and the pig is capable of passing in use along the fourth region of the pipeline.

8. A method according to claim 7 wherein the pig is magnetically retained or released by the magnetic means having elements (112, 114, 116, 118) located in association with each of the said regions of the pipeline extending from the chamber (102).

9. A method according to claim 6 for introducing the pig into the pipe including the steps of holding the pig in a trap provided with the chamber (65) using the magnetic or magnetically attractable means and then releasing the pig into the pipe by operating the magnetic or magnetically attractable means.

10. A method according to claims 6 for removing the pig form the pipeline including the steps of introducing the object into a trap provided with the chamber (65) and then retaining the pig in the trap using the magnetic or magnetically attractable means.

## Patentansprüche

1. Vorrichtung, umfassend:
eine Rohrleitung (70), die zum Leiten eines fließenden Fluids eingesetzt werden kann;
eine Kammer (65), die einen ersten Bereich der Rohrleitung bildet, wobei an diesen ersten Bereich ein zweiter Bereich und ein dritter Bereich der Rohrleitung getrennt angeschlossen sind;
einen magnetisch anziehbaren Rohrreiniger (56), der zumindest teilweise aus einem magnetischen oder magnetisch anziehbaren Material besteht, wobei sich der Rohrreiniger den dritten Bereich der Rohrleitung entlang bewegen kann;
ein magnetisches oder magnetisch anziehbares Mittel (88) zum magnetischen Anziehen oder Abstoßen des Rohrreinigers, wobei das magnetische oder magnetisch anziehbare Mittel (88) der Kammer (65) zugeordnet angeordnet ist;
sowie Steuermittel zum Steuern der Anziehung oder Abstoßung des magnetischen oder magnetisch anziehbaren Mittels (88), um die Bewegung des Rohrreinigers (56) entlang der Rohrleitung zu steuern;
**dadurch gekennzeichnet, dass**
die Querschnittsfläche der Kammer größer als die Querschnittsfläche des zweiten Bereichs und des dritten Bereichs der Rohrleitung ist,
bei der Verwendung der zweite Bereich der Rohrleitung einen Fluideinlass in die Kammer bildet und der dritte Bereich der Rohrleitung einen Fluidauslass aus ihr heraus bildet,
die magnetischen oder magnetisch anziehbaren Mittel (88) betätigt werden können, um den Rohrreiniger (56) magnetisch innerhalb der Kammer (65) zurückzuhalten, so dass Fluid am zurückgehaltenen Rohrreiniger vorbeifließen kann, und betätigt werden können, um den zurückgehaltenen Rohrreiniger in Richtung des Fluidauslasses der Kammer aus der Kammer freizugeben.

2. Vorrichtung nach Anspruch 1, worin ein vierter Rohrleitungsbereich getrennt vom zweiten und vom dritten Bereich an die Kammer (102) angeschlossen ist und das magnetische oder magnetisch anziehbare Mittel betätigt werden kann, um den Rohrreiniger (104) innerhalb der Kammer (102) zu einem ausgewählten aus dem dritten und dem viertem Bereich der Rohrleitung gedrängt werden kann, und die Rohrleitung bei der Verwendung den vierten Bereich der Rohrleitung entlang gehen kann.

3. Vorrichtung nach Anspruch 2, worin das magnetische Mittel Elemente (112, 114, 116, 118) aufweist, die jedem der sich von der Kammer (102) aus erstreckenden Bereiche der Rohrleitung zugeordnet angeordnet sind.

4. Vorrichtung nach Anspruch 1, umfassend eine Falle(?) (64) zum Einsetzen des Rohrreinigers (56) in die Rohrleitung, wobei das magnetische oder magnetisch anziehbare Mittel (68) der Falle zugeordnet ist und verwendet wird, um den Rohrreiniger in der Falle zu halten.

5. Vorrichtung nach Anspruch 4, worin das magnetische oder magnetisch anziehbare Mittel zwei magnetische oder magnetisch anziehbare Elemente (51, 53) umfasst, wobei jedes derartige Element eingesetzt werden kann, um den Rohrreiniger (24) in der Falle zu halten.

6. Verfahren zur Steuerung eines magnetisch anziehbaren Rohrleitungsreinigers (56), wobei das Verfahren folgende Schritte umfasst:
das Bereitstellen einer Rohrleitung (70), die eingesetzt werden kann, um ein fließendes Fluid zu leiten;
das Bereitstellen einer Kammer (65), die einen ersten Bereich der Rohrleitung bildet, wobei an diesen ersten Bereich ein zweiter Bereich und ein dritter Bereich der Rohrleitung getrennt angeschlossen sind;
das Bereitstellen eines magnetisch anziehbaren Rohrreinigers (56), der zumindest teilweise aus einem magnetischen oder magnetisch anziehbaren Material besteht, wobei sich der Rohrreiniger den dritten Bereich der Rohrleitung entlang bewegen kann;
das Bereitstellen eines magnetischen oder magnetisch anziehbaren Mittels (88) zum magnetischen Anziehen oder Abstoßen des Rohrreinigers, wobei das magnetische oder magnetisch anziehbare Mittel (88) der Kammer (65) zugeordnet angeordnet ist;
sowie das Bereitstellen von Steuermittel zum Steuern der Anziehung oder Abstoßung des magnetischen oder magnetisch anziehbaren Mittels (88), um die Bewegung des Rohrreinigers (56) entlang der Rohrleitung zu steuern;
**dadurch gekennzeichnet, dass**
die Querschnittsfläche der so bereitgestellten Kammer größer als die Querschnittsfläche des zweiten Bereichs und des dritten Bereichs der Rohrleitung ist,
bei der Verwendung der zweite Bereich der Rohrleitung verwendet wird, um einen Fluideinlass in die Kammer zu bilden, und der dritte Bereich der Rohrleitung verwendet wird, um einen Fluidauslass aus ihr heraus zu bilden,
das Steuermittel verwendet wird, um die magnetischen oder magnetisch anziehbaren Mittel (88) zu steuern, um den Rohrreiniger (56) magnetisch innerhalb der Kammer (65) zurückzuhalten, so dass Fluid am zurückgehaltenen Rohrreiniger vorbeifließen kann, und betätigt werden können, um den zurückgehaltenen Rohrreiniger in Richtung des Fluidauslasses der Kammer aus der Kammer freizugeben.

7. Verfahren nach Anspruch 6, worin der Rohrreiniger magnetisch in der Kammer (102) zurückgehalten oder aus ihr freigegeben wird, wobei ein vierter Rohrleitungsbereich vorhanden ist, der getrennt vom zweiten und vom dritten Bereich an die Kammer angeschlossen ist, und das magnetische oder magnetisch anziehbare Mittel verwendet wird, um den Rohrreiniger (104) innerhalb der Kammer (102) zu einem ausgewählten aus dem dritten und dem vierten Bereich der Rohrleitung zu drängen, und der Rohrreiniger bei der Verwendung den vierten Bereich der Rohrleitung entlang gehen kann.

8. Verfahren nach Anspruch 7, worin der Rohrreiniger vom magnetischen Mittel magnetisch zurückgehalten oder losgelassen wird, das Elemente (112, 114, 116, 118) aufweist, die jedem der sich von der Kammer (102) erstreckenden Bereiche zugeordnet angeordnet sind.

9. Verfahren nach Anspruch 6 zum Einsetzen des Rohrreinigers in die Rohrleitung, folgende Schritte umfassend: das Halten des Rohrreinigers in einer Falle, die an der Kammer (65) vorgesehen ist, unter Verwendung des magnetischen oder magnetisch anziehbaren Mittels, und dann das Freigeben des Rohrreinigers in die Rohrleitung durch Betätigen des magnetischen oder magnetisch anziehbaren Mittels.

10. Verfahren nach Anspruch 6 zum Herausnehmen des Rohrreinigers aus der Rohrleitung, umfassend die Schritte des Einbringens des Objektes in eine Falle, die an der Kammer (65) vorgesehen ist, und dann das Zurückhaltens des Rohrreinigers in der Falle unter Verwendung des magnetischen oder magnetisch anziehbaren Mittels.

## Revendications

1. Appareil comportant :
une conduite (70) pouvant être mise en service pour conduire un fluide coulant;
une chambre (65) formant une première région de la conduite, à cette première région, une deuxième et une troisième région de la conduite sont connectées séparément;
un furet magnétiquement attirable (56) étant au moins partiellement en un matériau magnétique ou attirable magnétiquement, ledit furet étant apte à passer le long de la troisième région de la conduite;
un moyen magnétique ou attirable magnétiquement (88) pour attirer magnétiquement ou repousser le furet, le moyen magnétique ou attirable magnétiquement (88) étant situé en association avec la chambre (65);
et un moyen de commande pour commander l'attraction ou la répulsion du moyen magnétique ou attirable magnétiquement (88) de façon à commander le déplacement du furet (56) le long de la conduite;
**caractérisé en ce que**:
la zone en section transversale de la chambre est plus grande que la zone en section transversale de la deuxième région et de la troisième région de la conduite;
en cours d'utilisation, la deuxième région de la conduite formant une entrée de fluide à la chambre et la troisième région de la conduite formant une sortie du fluide de celle-ci,
les moyens magnétiques ou attirables magnétiquement (88)peuvent être mis en service pour retenir magnétiquement le furet (56) dans la chambre (65) de façon à permettre l'écoulement du fluide au-delà du furet retenu et peuvent être mis en service pour effectuer le relâchement du furet retenu de la chambre dans la direction de la sortie de fluide de la chambre.

2. Appareil selon la revendication 1, où une quatrième région de conduite est connectée à la chambre (102) séparément des deuxième et troisième régions, et le moyen magnétique ou attirable magnétiquement peut être mis en service pour solliciter le furet (104) dans la chambre (102) vers une région sélectionnée parmi les troisième et quatrième régions de la conduite, et le furet est apte à passer, en cours d'utilisation, le long de la quatrième région de la conduite.

3. Appareil selon la revendication 2, où le moyen magnétique comporte des éléments (112,114,116,118) localisés en association avec chacune desdites régions de la conduite s'étendant à partir de la chambre (102).

4. Appareil selon la revendication 1, comportant un clapet (64) pour introduire le furet (56) dans la conduite, le moyen magnétique ou attirable magnétiquement (86) étant associé au clapet et étant utilisé pour retenir le furet dans le clapet.

5. Appareil selon la revendication 4, dans lequel le moyen magnétique ou attirable magnétiquement comporte deux éléments magnétiques ou attirables magnétiquement (51,53), chacun de ces éléments étant utilisable pour retenir le furet (24) dans le clapet.

6. Procédé pour commander un furet de conduite attirable magnétiquement (56), le procédé comprenant les étapes consistant à:
réaliser une conduite (70) pouvant être mise en service pour conduire un fluide coulant;
réaliser une chambre (65) formant une première région de conduite, à ladite première région, une deuxième région et une troisième région de la conduite sont connectées séparément;
réaliser un furet attirable magnétiquement (56) au moins partiellement en un matériau magnétique ou attirable magnétiquement, ledit furet étant apte à passer le long de la troisème région de la conduite;
réaliser un moyen magnétique ou attirable magnétiquement (88) pour attirer ou repousser magnétiquement le furet, le moyen magnétique ou attirable magnétiquement (88) étant localisé en association avec la chambre (65) ;
et prévoir un moyen de commande pour commander l'attraction ou la répulsion du moyen magnétique ou attirable magnétiquement (88) de façon à commander le déplacement du furet (56) le long de la conduite;
**caractérisé en ce que**:
la zone en section transversale de la chambre ainsi réalisée est plus grande que la zone en section transversale de la deuxième région et de la troisième région de la conduite,
en cours d'utilisation, la deuxième région de la conduite est utilisée pour réaliser une entrée de fluide à la chambre, et la troisième région de la conduite est utilisée pour réaliser une sortie de fluide de celle-ci,
le moyen de commande est utilisé pour commander au moyen magnétique ou attirable magnétiquement (88) de retenir magnétiquement le furet (56) dans la chambre (65) de manière à permettre l'écoulement du fluide au-delà du furet retenu et pour effectuer le relâchement du furet retenu de la chambre dans la direction de la sortie de fluide de la chambre .

7. Procédé selon la revendication 6, où le furet est retenu ou relâché magnétiquement de la chambre (102) qui comporte une quatrième région de conduite connectée à la chambre séparément des deuxième et troisième régions, et le moyen magnétique ou attirable magnétiquement est utilisé pour solliciter le furet (104) dans la chambre (102) vers une région sélectionnée parmi les troisième et quatrième régions de la conduite, et le furet peut passer en cours d'utilisation le long de la quatrième région de la conduite.

8. Procédé selon la revendication 7, où le furet est retenu ou relâché magnétiquement par le moyen magnétique comportant des éléments (112,114,116,118) situés en association avec chacune desdites régions de la conduite s'étendant à partir de la chambre (102).

9. Procédé selon la revendication 6 pour introduire le furet dans la conduite comprenant les étapes consistant à maintenir le furet dans un clapet prévu dans la chambre (65) en utilisant le moyen magnétique ou attirable magnétiquement et en relâchant ensuite le furet dans la conduite par une mise en service du moyen magnétique ou attirable magnétiquement.

10. Procédé selon la revendication 6 pour retirer le furet de la conduite comprenant les étapes consistant à introduire le furet dans un clapet prévu dans la chambre (65) et à retenir ensuite le furet dans le clapet en utilisant le moyen magnétique ou attirable magnétiquement.
